# EUROPEAN PATENT SPECIFICATION

(11) **EP 2 450 268 B1**
(45) Date of publication and mention of the grant of the patent: **11.09.2013**
(21) Application number: 11187998.7
(22) Date of filing: 07.11.2011
(51) Int. Cl.: B62D 25/18, B62D 25/16

(54) **Splash flap for lorries**
Spritzklappe für Lkws
Rabat anti-éclaboussures pour camions

(30) Priority: 09.11.2010 DK 201070478
(43) Date of publication of application: 09.05.2012
(73) Proprietor: PSA Industri A/S, 8370 Hadsten (DK)
(72) Inventor: Stidsen, Poul, 8250 Egå (DK)
(74) Representative: Gregersen, Niels Henrik

(56) References cited:
- EP-A1- 2 100 800
- WO-A1-93/12966
- FR-A1- 2 719 278

## Description

### Field of the Invention

The present invention concerns a splash flap for lorries, and of the kind specified in preamble of claim 1.

### Background of the Invention

With the object of reducing or stopping the spray produced by the wheels of vehicles in wet conditions, it is well-known to mounted splash flaps on vehicles, in particular heavy vehicles.

It is prior art to have splash flaps that include spray reducing and/or liquid decelerating means adapted to impede and retain water which is sprayed backwards/upwards from the driving wheels and to conduct the retained water down from the splash flap or an associated mudguard.

Lorry mudguards can be very bulky, implying that most often there is to be fitted splash guards with spray reducing and/or liquid decelerating means both internally of the rearmost curving part of the mudguard and also depending from a lower rearmost edge part of the mudguard.

Hereby, coupling zones very often appear between functionally interconnected splash flaps where the spray reducing and/or liquid decelerating means are more or less made ineffective.

WO 93/12966A1 discloses a spray-suppression system for reducing the sprays caused by vehicle wheels. The spray-suppression system comprises the wheel's mudguard part, a rain flap part and a spray-suppression material layer fixed to the interior side of these. At least a part of the mudguard part and the rain flap part are made into a solid whole, to which the spray-suppression material layer is fixed. The rain flap part is either welded to the mudguard part or formed to be an integral part of it.

EP 2 008 800 A1 discloses a mud flap having a solid wall and a permeable wall that is in a form of grid, where the permeable wall extends parallel to the solid wall and defines a water channeling space. The permeable wall has cells that are arranged along parallel lines and at longitudinal edges. Bases of the cells are connected to the solid wall by welding. Stiffeners are in the form of rods engaged in the water channeling space, where the rods are extended in all or a part of total height of the flap.

### Object of the Invention

It is the purpose of the invention to indicate a new and improved splash flap of the kind mentioned in the introduction, and where particularly the above mentioned problems with reduced function of the said spray reducing and/or liquid decelerating means can be counteracted in an efficient way.

In addition, the splash flap according to the invention will have other substantial functional advantages.

### Description of the Invention

The splash flap according to the invention is characterised in that the splash flap parts include mutually complementing coupling parts such that respective spray reducing and/or liquid decelerating means of the respective splash flap parts operatively and without visible joints can be coupled together for forming a unbroken interacting splash flap surface, and that said complementing coupling parts are constituted by spaced projecting fingers at and spaced apart from a rear side of a lower edge of a splash flap part, and by recesses provided at a rear side of an upper edge of a splash flap part spaced apart therefrom, the recesses forming channels for receiving the projecting fingers by contact against an inner side of the mudguard.

By simple measures it hereby becomes possible to achieve a new and improved splash flap where particularly the problems of reduced function of coupling zones between interconnected spray reducing and/or liquid decelerating means can be counteracted in an efficient way.

With the object of simplifying the joining of individual splash flap parts, the splash flap according to the invention can be designed such that that the projecting fingers by injection moulding in a suitable plastic material, e.g. polyethylene (PE), are connected with a common transverse support strip which spaced apart from the lower edge is connected with the splash flap part by means of individual connecting members.

Correspondingly, it may be advantageous that the recesses are made by injection moulding in a suitable plastic material, e.g. polyethylene (PE), in one piece with an upper transverse edge part of the splash flap, the edge part disposed with spacing behind the splash flap.

In a preferred embodiment, the splash flap according to the invention is designed such that the spray reducing and/or liquid decelerating means are constituted by sheet profiles with longitudinal V-grooves alternatingly open forwards and rearwards, respectively, in the transverse direction and extending perpendicularly to opposing ends of the splash flap where the forwardly open V-grooves are designed at the bottom with a dense series of preferably circular openings.

With the object of simplifying mounting, the splash flap according to the invention can suitably be designed such that every other of the rearwardly open grooves along the forwardly closed ridge is connected with the mudguard part and the support strip, respectively, by means of the individual connecting members.

The splash flap according to the invention can further suitably be designed such that the individual connecting members include a tubular connecting member with a lower external collar within which is formed an annular cavetto for receiving a plate edge of a hole, e.g. in the mudguard part, the tubular connecting member being provided with an upwards pointed ridge part that fits with the rear side of the forwardly closed ridge of the rearward open groove, and with an upper stem part comprising a head that fits externally on the forwardly closed ridge of the rearward open groove, the stem part designed at a lower end with a projecting unilaterally sloping edge part which is adapted to engage with and to be fixed inside an annular internal recess of the tubular connecting member.

### Description of the Drawing

The invention is now explained in detail in connection with the drawing, in which:
- Fig. 1: shows a view of an embodiment of a splash flap according to the invention shown during a first mounting step internally of a mudguard for a lorry;
- Fig. 2: shows a view of the embodiment shown in Fig. 1 of a splash flap according to the invention shown during a second mounting step internally of a mudguard for a lorry;
- Fig. 3: shows a view of the embodiment shown in Fig. 1 of a splash flap according to the invention shown during a third mounting step internally of a mudguard for a lorry;
- Fig. 4: shows a view of the embodiment shown in Fig. 1 of a splash flap according to the invention shown during a final mounting step internally of a mudguard for a lorry;
- Fig. 5: shows a view of the embodiment shown in Fig. 1 of a splash flap according to the invention shown mounted internally in a mudguard for a lorry, but viewed from a rear side of the mudguard;
- Fig. 6: shows a view of an upper part of a splash flap according to the invention mounted internally of a mudguard, as seen from below;
- Fig. 7: shows a view corresponding to that in Fig. 6, only as seen from a side;
- Fig. 8: shows a view of a lower part of a splash flap according to the invention, shown mounted internally in a secondary mudguard part for mounting at a lower end of a mudguard for a lorry;
- Fig. 9: shows a view of the secondary mudguard part according to the invention shown in Fig. 8, as seen from a lower end;
- Fig. 10: shows a view of the secondary mudguard part and splash flap, respectively, according to the invention shown in Figs. 8 and 9, as seen from a front side of the splash flap according to the invention;
- Fig. 11: shows a perspective view of an upper part of a splash flap cf. Figs. 6 and 7 according to the invention, as seen from a lower end part and rear side thereof, respectively;
- Fig. 12: shows a lower end part of the upper splash flap according to the invention shown in Fig. 11, as seen from the rear;
- Fig. 13: shows an upper end part of the upper splash flap according to the invention shown in Fig. 11, as seen from the rear;
- Fig. 14: shows a view of an enlarged rear side of an upper splash flap part, cf. Fig. 11; and
- Fig. 15: shows views of embodiments of connecting members for e.g., cf. Figs. 8-10, mounting a lower splash flap part internally of a secondary lower mudguard part.

### Detailed Description of the Invention

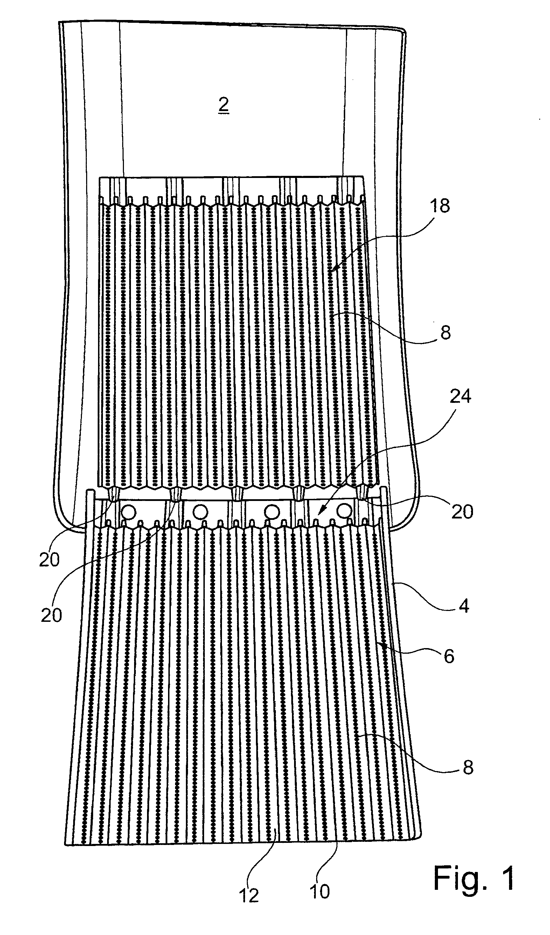

The mudguard 2 shown in Figs. 1-5 is mounted with a further mudguard part 4 extending from a lower edge of the mudguard 2, on the forward facing side of which part 4 is fitted a splash flap 6 which includes a spray reducing and/or liquid deceleration profiled plate 8 with longitudinal V-grooves 10, 12 that are open forwards and rearwards alternatingly in the transverse direction, the grooves 10, 12 extending perpendicularly to opposite ends of the splash flap 6, where the forward open V-grooves 10 are provided at the bottom with a dense row of preferably circular openings 14.

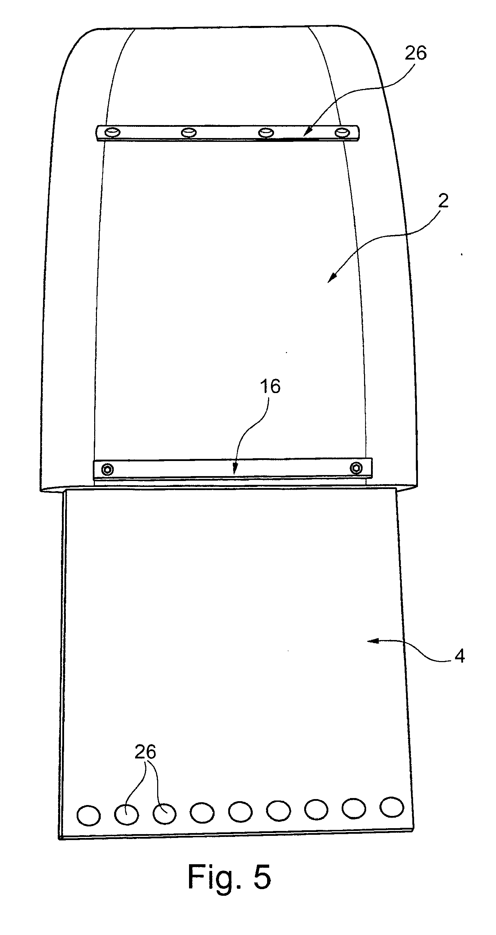

In Fig. 1 is shown how an upper transverse edge part 24 of the mudguard part 4 and the splash flap 6 is fastened by means of bolts, washers and nuts to a lower edge of the mudguard 2 which cf. Fig. 5 is also provided with a transverse metal strip 16 at the back side for reinforcing the splash flap 6.

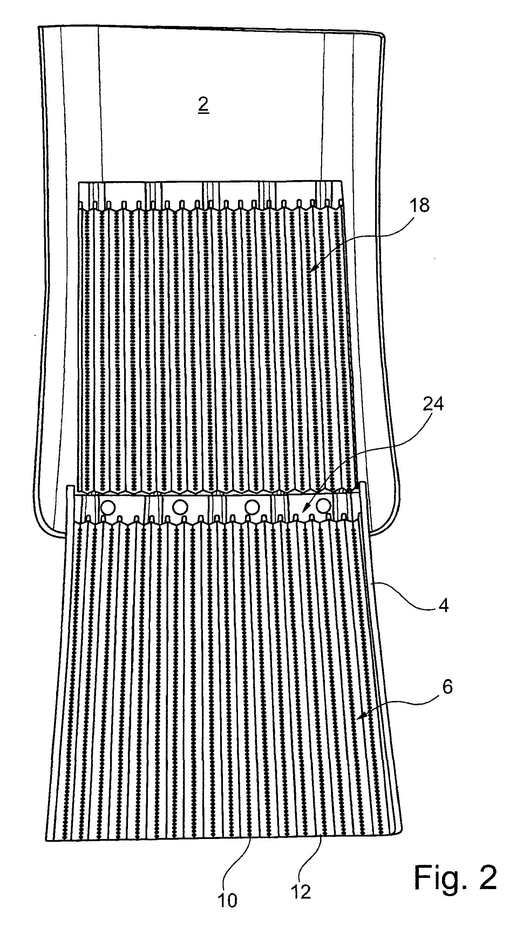

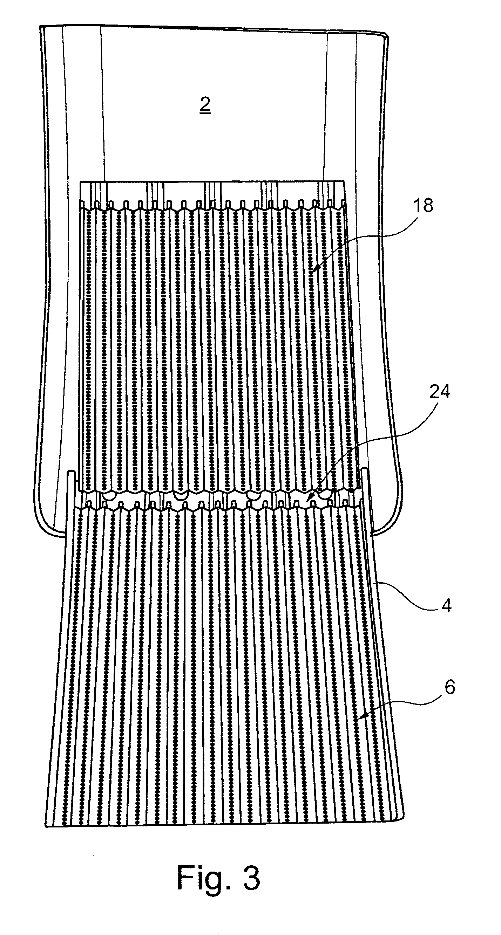

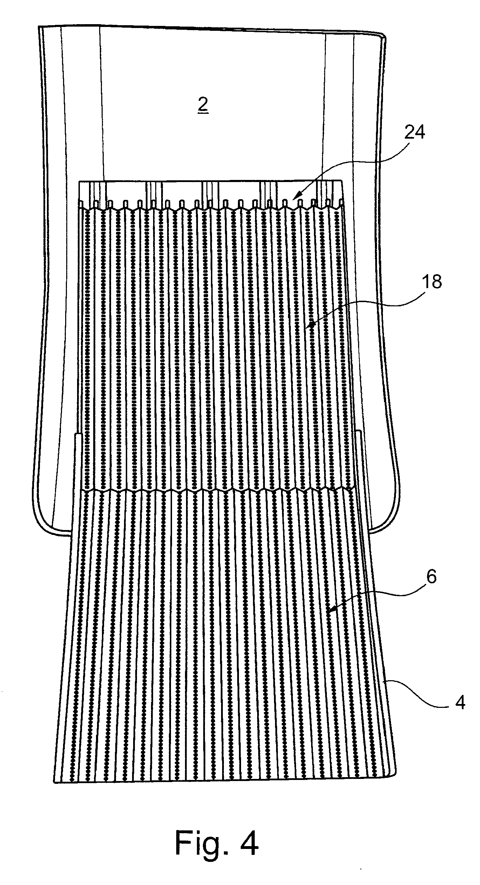

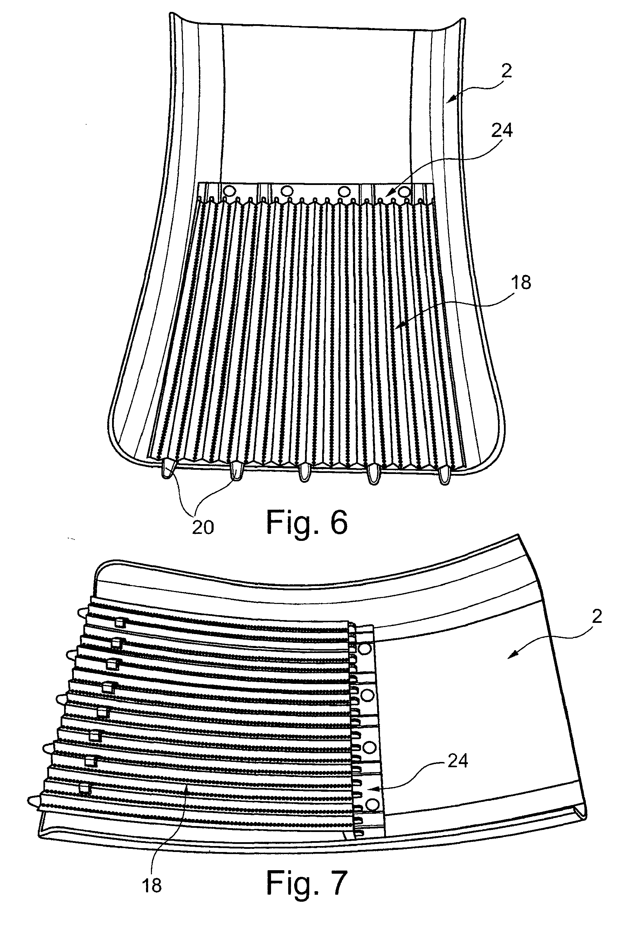

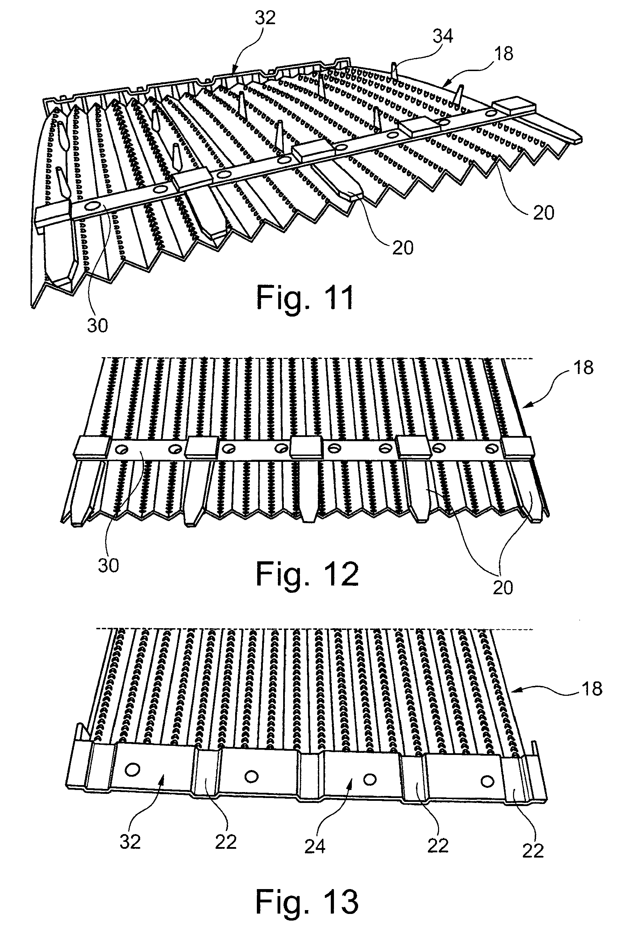

In Fig. 1 is also seen how an upper splash flap part 18 is ready to be connected with the splash flap 6 by means of connecting fingers 20 (se also Figs. 6-7 and Figs. 11-12), as the said connecting fingers 20 are brought in position opposite the upper recesses 22 between the back side of an upper edge part of the mudguard part 4 (see also Fig. 13). In Figs. 2 and 3 the upper splash flap part 18 is brought into even tighter mutual connection, i.e. the connecting fingers 20 are inserted even longer into the recesses 22 until the splash flap 6 and the splash flap part 18 are brought into close mutual contact in Fig. 4 such that respective V-grooves 10 and 12 of the respective splash flap parts 6 and 18 are aligned with each other.

Finally, an upper transverse edge part 24 of the splash flap part 18 is fastened to the internal side of the mudguard 2 by means of bolts, washers and nuts. This fastening is, cf. Fig. 5, furthermore provided at the rear side with a transverse metal strip 26 for reinforcing the fastening of the splash flap part 18.

Figs. 6-7 show how the splash flap part 18 can be fastened internally of the mudguard 2 where also the connecting fingers 20 appear to protrude at the lower edge of the splash flap part 18.

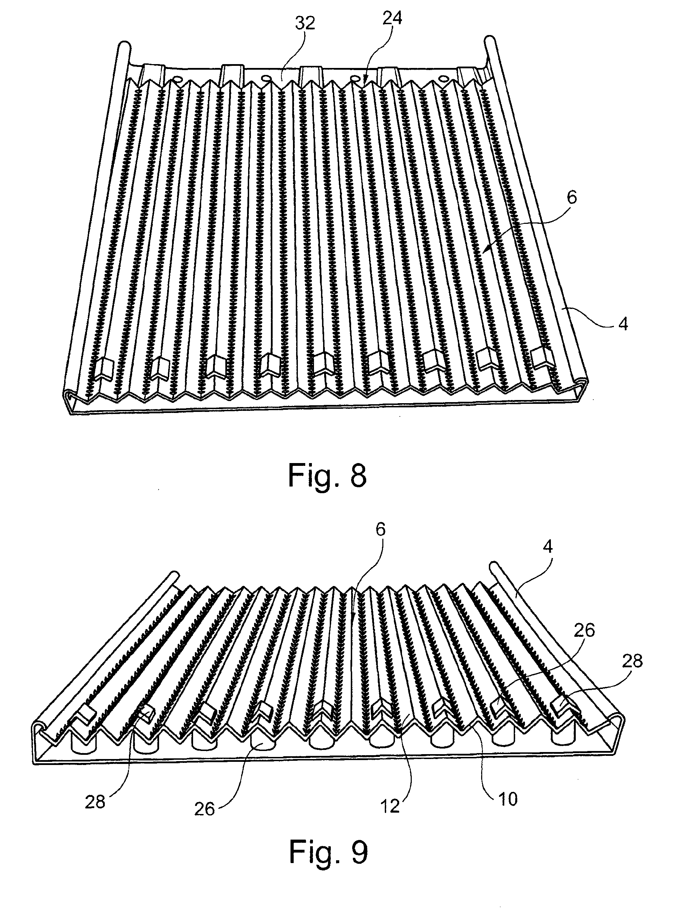

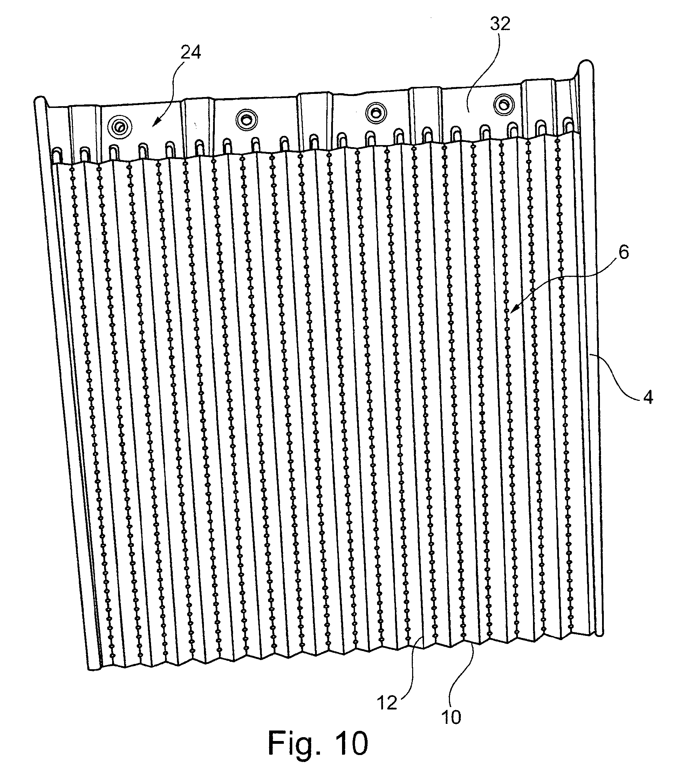

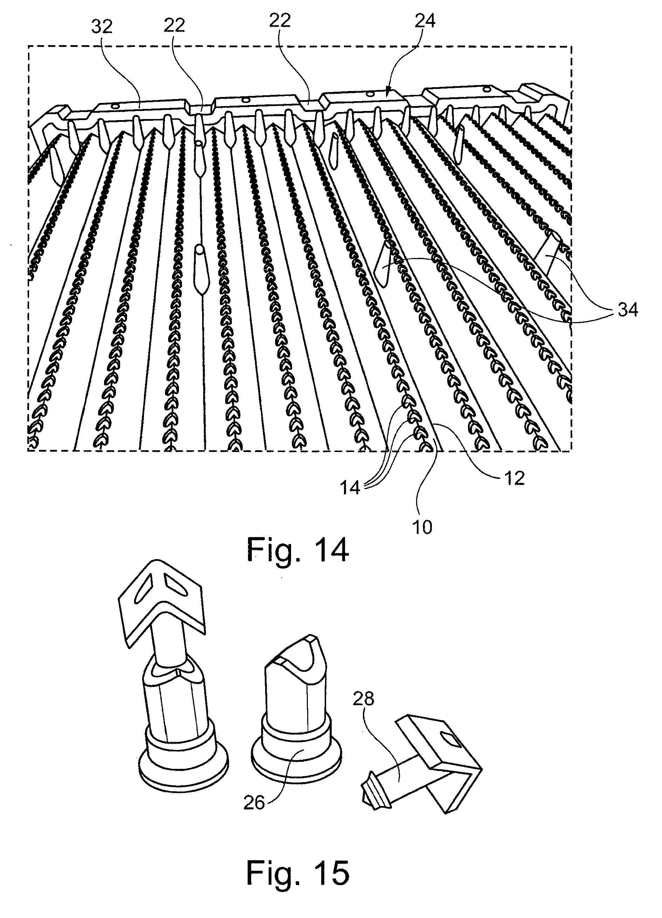

Figs. 8-10 show how the splash flap 6 is mounted internally of the mudguard 4. Fig. 9 shows most clearly how the lower end of the splash flap 6 is fastened to the mudguard part 4 by means of individual connecting members 26, 28 (Fig. 15) while Fig. 10 most clearly shows the upper edge part 15 of the splash flap.

Figs. 11-12 show the projecting connecting fingers 20 at a lower end of the splash flap part 18, the connecting fingers 20 being fastened to the splash flap part 18 by means of a common transverse support strip 30 which is connected with the splash flap part 18 by means of connecting parts 28. Figs. 11 and 14 further show the transverse support strip 30 and spacers 34 that project from the rear side of the splash flap part 18.

Fig. 13 shows a rear side of the common edge part 24, 32 with the recesses 22 at a rear side of the splash flap part 18. The feature that the edge part 32 is disposed with spacing behind the splash flap part 18 is seen more clearly in Fig. 14.

## Claims

1. A splash flap for lorries and of the kind including one or more splash flap parts (18) adapted to be mounted internally of a curved mudguard (2), and a splash flap part (6) adapted to be mounted on a mudguard part (4) extending from a lower rearmost edge part of the mudguard (2), the splash flap parts (6, 18) including spray reducing and/or liquid impeding means that are adapted to decelerate and retain water sprayed up from the wheels and to counteract formation of water mist from the splash flap and to conduct retained water down from the splash flap, **characterised in that** the splash flap parts (6, 18) include mutually complementing coupling parts (20, 22) such that respective spray reducing and/or liquid decelerating means of the respective splash flap parts (6, 18) operatively and without visible joints can be coupled together for forming a unbroken interacting splash flap surface, and said complementing coupling parts are constituted by spaced projecting fingers (20) at and spaced apart from a rear side of a lower edge of a splash flap part (18), and by recesses (22) provided at a rear side of an upper edge of a splash flap part spaced apart therefrom, the recesses (22) forming channels for receiving the projecting fingers (20) by contact against an inner side of the mudguard.

2. A splash flap according to claim 1, **characterised in that** said projecting fingers (20) by injection moulding in a suitable plastic material, e.g. polyethylene (PE), are connected with a common transverse support strip (30) which spaced apart from the lower edge is connected with the splash flap part (18) by means of individual connecting members (28).

3. A splash flap according to claim 1, **characterised in that** said recesses (22) are made by injection moulding in a suitable plastic material, e.g. polyethylene (PE), in one piece with an upper transverse edge part (24) of the splash flap part (6, 18), the edge part (24) disposed with spacing behind the splash flap part (6, 18).

4. A splash flap according to claim 1, **characterised in that** the spray reducing and/or liquid decelerating means are constituted by sheet profiles with longitudinal V-grooves (10, 12) alternatingly open forwards and backwards, respectively, in the transverse direction and extending perpendicularly to opposing ends of the splash flap where the forwardly open V-grooves (10) are designed at the bottom with a dense series of preferably circular openings (14).

5. A splash flap according to any preceding claim, **characterised in that** every other of the rearwardly open grooves along the forwardly closed ridge is connected with the mudguard part and the support strip (30), respectively, by means of the individual connecting members (26, 28).

6. A splash flap according to any preceding claim, **characterised in that** the individual connecting members include a tubular connecting member (26) with a lower external collar within which is formed an annular cavetto for receiving a plate edge of a hole, e.g. in the mudguard part (4), the tubular connecting member being provided with an upwards pointed ridge part that fits with the rear side of the forwardly closed ridge of the rearwardly open groove (12), and with an upper stem part comprising a head that fits externally on the forwardly closed ridge of the rearwardly open groove (12), the stem part designed at a lower end with a projecting unilaterally sloping edge part which is adapted to engage with and to be fixed inside an annular internal recess of the tubular connecting member (26).

## Patentansprüche

1. Spritzklappe für Lkws und von der Art, die einen oder mehrere, zur inneren Befestigung in ein gekrümmtes Schutzblech (2) vorgesehene/n Spritzklappenteil/e (18) umfasst, sowie einen Spritzklappenteil (6), der zur Befestigung auf einen sich von einem unteren hintersten Randteil des Schutzbleches (2) erstreckenden Schutzblechteil (4) vorgesehen ist, wobei die Spritzklappenteile (6, 18) spritzbegrenzende und/oder fließbehindernde Mittel umfasst, die zur Verlangsamung und Zurückhaltung des von den Rädern hochgeschleuderten Wassers, zur Entgegenwirkung der Wassernebelbildung von der Spritzklappe sowie zum Hinunterleiten des zurückgehaltenen Wassers von der Spritzklappe vorgesehen sind, **dadurch gekennzeichnet, dass** die Spritzklappenteile (6, 18) gegenseitig komplementäre Verbindungsteile (20, 22) umfassen, so dass entsprechende spritzbegrenzende und/oder fließverlangsamende Mittel der entsprechenden Spritzklappenteile (6, 18) betrieblich und ohne sichtbare Zusammenfügungen zur Bildung einer ununterbrochenen, interagierenden Spritzklappenoberfläche verbindbar sind, und dass die erwähnten komplementären Verbindungsteile durch gegenseitig beabstandete, ausragende Finger (20) an und von der Hinterseite einer unteren Kante eines Spritzklappenteils (18) beabstandet sowie durch Aussparungen (22) an und von der Hinterseite einer oberen Kante eines Spritzklappenteils (18) beabstandet gestaltet sind, wobei die Aussparungen (22) Kanäle zur Aufnahme der ausragenden Finger (20) durch Kontakt gegen die Innenseite des Schutzbleches bilden.

2. Spritzklappe nach Anspruch 1, **dadurch gekennzeichnet, dass** die ausragenden Finger (20) durch Spritzgießen in einem geeigneten Kunststoffmaterial, z.B. Polyäthylen (PE), mit einem gemeinsamen, quer verlaufenden, von der Unterkante beabstandet und durch individuelle Verbindungsmittel (28) mit dem Spritzklappenteil (18) verbundenen Stützstreifen (30) verbunden sind.

3. Spritzklappe nach Anspruch 1, **dadurch gekennzeichnet, dass** die Aussparungen (22) durch Spritzgießen in einem geeigneten Kunststoffmaterial, z.B. Polyäthylen (PE), mit einem oberen, quer verlaufenden Randteil (24) des Spritzklappenteils (6, 18) einstückig hergestellt sind, wobei der Randteil (24) beabstandet hinter dem Spritzklappenteil (6, 18) angeordnet ist.

4. Spritzklappe nach Anspruch 1, **dadurch gekennzeichnet, dass** die spritzbegrenzenden und/oder fließbehindernden Mittel durch Blechprofile mit längs verlaufenden V-Furchen (10, 12), die in der Querrichtung wechselweise nach vorne bzw. nach hinten offen sind und senkrecht zu den gegenüberliegenden Enden der Spritzklappe verlaufen, gestaltet werden, wobei die nach vorne offenen V-Furchen (10) im Boden eine dichte Reihe von vorzugzweise kreisförmigen Öffnungen (14) aufweisen.

5. Spritzklappe nach irgendeinem der vorhergehenden Ansprüche, **dadurch gekennzeichnet, dass** jede zweite der nach hinten offenen Furchen entlang dem nach vorne geschlossenen Rücken durch die individuellen Verbindungsmittel (26, 28) mit dem Schutzblech bzw. dem Stützstreifen (30) verbunden ist.

6. Spritzklappe nach irgendeinem der vorhergehenden Ansprüche, **dadurch gekennzeichnet, dass** die individuellen Verbindungsmittel ein rohrförmiges Verbindungsstück (26) mit einem unteren außeren Kragen umfassen, in den eine umlaufende Hohl-kehle zum Aufnehmen einer Blechkante eines Lochs, z.B. in einem Schutzblechteil (4), geformt ist, wobei das rohrförmige Verbindungsstück einen aufwärts spitzen Rückenteil aufweist, der in die Hinterseite des nach vorne geschlossenen Rückens der nach hinten offenen Furche (12) sowie in einen oberen Stielteil hineinpasst, wobei der obere Stielteil einen Kopf aufweist, der äußerlich auf den nach vorne geschlossenen Rücken der nach hinten offenen Furche (12) passt, wobei der am unteren Ende vorgesehene Stielteil mit einem vorspringenden, einseitig abgeschrägten Randteil versehen ist, der zum Eingreifen mit und zur Befestigung in eine umlaufende, innere Aussparung des rohrförmigen Verbindungsstücks (26) vorgesehen ist.

## Revendications

1. Rabat anti-éclaboussures pour camions et du type comprenant une ou plusieurs parties de volet anti-éclaboussures (18) adaptées à être montées à l'intérieur d'un garde-boue incurvé (2), et une partie de rabat anti-éclaboussures (6) adaptée à être montée sur une partie garde-boue (4) s'étendant à partir d'une partie de bord arrière inférieur du garde-boue (2), les parties de volet anti-éclaboussures (6, 18) comprenant des moyens d'obstruction et/ou de réduction de pulvérisation liquide qui sont adaptés de manière à décélérer et à retenir de l'eau éclaboussée vers le haut depuis les roues et pour s'opposer à la formation de brouillard d'eau de l'élément volet et à conduire l'eau retenue vers le bas de l'élément volet, **caractérisé en ce que** les parties de rabat anti-éclaboussures (6, 18) comprennent des parties d'accouplement complémentaires l'une par rapport à l'autre (20, 22) de telle façon que des moyens respectifs de décélération de liquide et/ou de réduction de pulvérisation des parties de volet anti-éclaboussures respectives (6, 18) fonctionnellement et sans joints visibles peuvent être accouplés pour former une surface de volet d'interaction ininterrompue, et lesdites parties de couplage complémentaires sont constituées par des doigts en saillie espacés (20) au et à partir d'un côté arrière d'un bord inférieur d'une partie de rabat anti-éclaboussures (18), et par des évidements (22) prévus au niveau d'un côté arrière d'un bord supérieur d'une partie de rabat anti-éclaboussure à distance de celui-ci, les évidements (22) formant des canaux pour recevoir les doigts en saillie (20) par contact contre un côté interne du garde-boue.

2. Rabat anti-éclaboussure selon la revendication 1, **caractérisé en ce que** lesdits doigts en saillie (20) par moulage par injection dans une matière plastique appropriée, par exemple du polyéthylène (PE), sont connectés à une bande de support transversal commun (30) qui espacée du bord inférieur est reliée à la partie de rabat anti-éclaboussures (18) au moyen d'éléments de connexion individuels (28).

3. Rabat anti-éclaboussure selon la revendication 1, **caractérisé en ce que** lesdits évidements (22) sont fabriqués par moulage par injection dans une matière plastique appropriée, par exemple du polyéthylène (PE), en une seule pièce avec une partie de bord transversale supérieure (24) de la partie de volet anti-éclaboussures (6, 18), la partie de bord (24) disposée avec un espacement derrière la partie de rabat anti-éclaboussure (6, 18).

4. Rabat anti-éclaboussure selon la revendication 1, **caractérisé en ce que** les moyens de la réduction de pulvérisation et/ou de décélération de liquide sont constitués par des profils de tôle longitudinaux avec des rainures en V (10, 12) alternativement ouvert vers l'avant et vers l'arrière, respectivement, dans la direction transversale et s'étendant perpendiculairement aux extrémités opposées du rabat anti-éclaboussures dans lequel les rainures en V ouvertes vers l'avant (10) sont conçus au niveau de la partie inférieure avec une série dense d'ouvertures de préférence circulaires (14).

5. Rabat anti-éclaboussures selon l'une quelconque des revendications précédentes, **caractérisé en ce que** tous les deux rainures ouvertes vers l'arrière le long de l'arête fermée vers l'avant sont reliées à l'élément garde-boue et la bande de support (30), respectivement, par l'intermédiaire des éléments de connexion individuels (26, 28).

6. Rabat anti-éclaboussures selon l'une quelconque des revendications précédentes, **caractérisé en ce que** les éléments de connexion individuels comprennent un élément de raccordement tubulaire (26) avec un collier externe inférieur à l'intérieur duquel est formée une gorge annulaire pour recevoir un bord de plaque d'un trou, par exemple dans l'élément garde-boue (4), l'élément de connexion tubulaire étant pourvu d'une partie d'arête pointue vers le haut qui s'emboîte avec le côté arrière de l'arête fermée vers l'avant de la rainure ouverte vers l'arrière (12), et avec une partie de tige supérieure comprenant une tête qui s'adapte à l'extérieur sur l'arête fermée vers l'avant de la rainure ouverte vers l'arrière (12), la partie de tige conçue au niveau d'une extrémité inférieure avec une partie de bord inclinée faisant saillie de manière unilatérale qui est adapté pour se mettre en prise avec et à être fixé à l'intérieur d'un évidement interne annulaire de l'élément de connexion tubulaire (26).
